# EUROPEAN PATENT SPECIFICATION

(11) **EP 4 657 718 B1**
(45) Date of publication and mention of the grant of the patent: **08.07.2026**
(21) Application number: 24178776.1
(22) Date of filing: 29.05.2024
(51) Int. Cl.: H02K 1/278, H02K 1/276

(54) **A ROTOR MAGNET ASSEMBLY**
ROTORMAGNETANORDNUNG
ENSEMBLE AIMANT DE ROTOR

(43) Date of publication of application: 03.12.2025
(73) Proprietor: ABB SCHWEIZ AG, 5400 Baden (CH)
(72) Inventor: Mäkinen, Antti, 00380 Helsinki (FI); Vuorio, Ari, 00380 Helsinki (FI); Keitamo, Jori-Pekka, 00380 Helsinki (FI)
(74) Representative: Kolster Oy Ab

(56) References cited:
- EP-A1- 2 360 816
- EP-A1- 3 402 045
- EP-B1- 3 179 605
- CN-A- 110 380 535
- DE-A1- 102005 042 543
- US-A1- 2019 036 400
- US-B2- 8 664 819
- US-B2- 9 973 045

## Description

### BACKGROUND OF THE INVENTION

### FIELD OF THE INVENTION

This invention relates to a rotor magnet assembly with at least one magnet and a base plate, where the magnet is secured against the base plate by a cover part.

### DESCRIPTION OF PRIOR ART

In electric motors and generators, power transmission between a stator and a rotor is enabled as a magnetic field is created to the rotor to communicate with a magnetic field provided to the stator by field excitation. The magnetic field of the rotor may be created either by permanent magnets or electromagnets, which are typically provided to an outer circumference of the rotor middle section. In case of permanent magnets, several magnet blocks are typically secured to the circumference of the rotor by mechanical binding elements, such as bolts or conductive bands.

In known solutions of the magnet attachment, limited binding force is achieved for securing the magnets. This is often due to the relatively brittle structure of the magnets as well as sub-optimal direction and distribution of the binding forces at the interface between the magnet and the binding elements. Due to the limited binding force, the magnet assembly may act as a factor limiting the maximum allowed speed of rotation of the rotor, thereby restricting the scope of use of the motor or generator.

Another disadvantage of the known solutions is that the magnets are typically secured directly to the rotor, meaning that the securing may only be performed at the location of the rotor during the assembly. This causes the rotor assembly process to be hindered by the attachment of the magnets, and the magnet attachment may need to be performed in a sub-optimal working orientation.

Document US 2019/036400 A1 discloses a rotor magnet assembly of the prior art.

### SUMMARY OF THE INVENTION

An object of the present invention is to solve the above-mentioned drawbacks and to provide a rotor magnet assembly enabling a fast and secure attachment of the magnets to the rotor. This object is achieved with an arrangement according to independent claim 1.

By providing an assembly with at least one magnet accommodated on a base plate and a cover part arranged to secure the magnet against the base plate so that branches of the cover part extend into grooves of the base plate, it is possible to easily obtain a strong mechanical binding between the magnet and the base plate.

Preferred embodiments of the invention are disclosed in the dependent claims.

### BRIEF DESCRIPTION OF DRAWINGS

In the following the present invention will be described in closer detail by way of example and with reference to the attached drawings, in which
Figure 1 illustrates a first embodiment of a rotor magnet assembly,
Figure 2 illustrates a second embodiment of the rotor magnet assembly,
Figure 3 illustrates a third embodiment of the rotor magnet assembly, and
Figure 4 illustrates a base plate of a fourth embodiment of the rotor magnet assembly.

### DESCRIPTION OF AT LEAST ONE EMBODIMENT

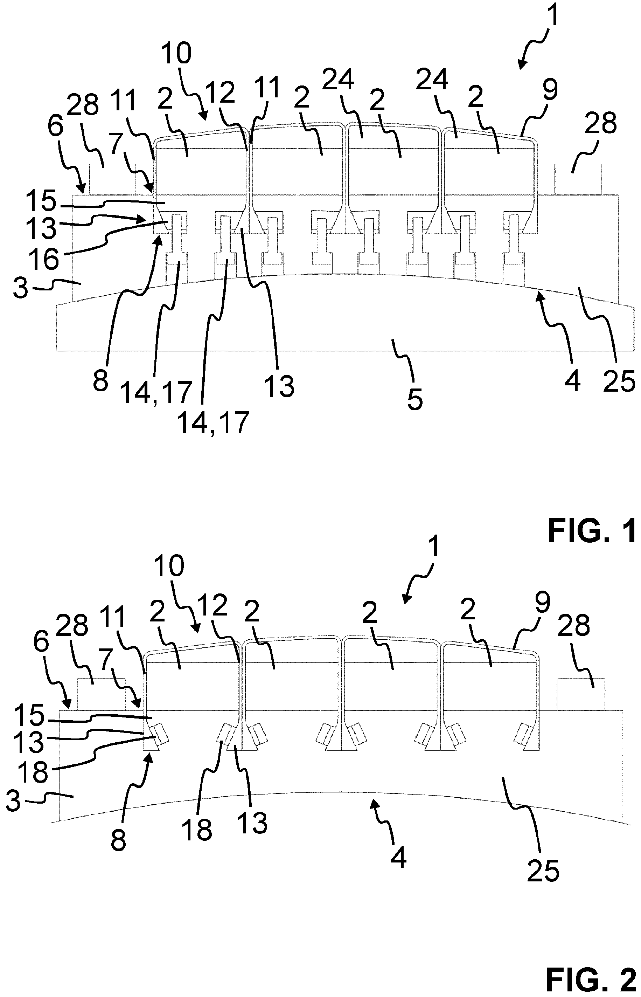

Figure 1 illustrates a cross-cut section of a first embodiment of a rotor magnet assembly 1, where the assembly is seen as attached to a rotor 5. As seen in this example, the assembly comprises a base plate 3 having a first surface 4 for attaching against the rotor 5 and an opposite second surface 6. In this case, the assembly is provided with a plurality of magnets 2 accommodated on the second surface 6, and in other embodiments of the assembly 1, any other number of magnets 2, such as only one, may be provided. The attachment to the rotor 5 may be implemented by, for example, fixing bolts 28 extending to the rotor 5 through the base plate 3, as illustrated in Figure 1. In this example, the first surface 4 is provided as an arched surface conforming to the curvature of the rotor circumference, and the second surface 6 is provided as a flat surface to which the magnets 2 are arranged. Each magnet 2 is also provided with a flat surface forming a contact with the second surface 6. In other embodiments of the assembly 1, however, the second surface 6 may also be provided with slots for accommodating the magnets 2, for example, or the second surface 6 and the contacting surfaces of the magnets 2 may be mutually shaped to allow them to lock into predefined mutual positions.

In the example of Figure 1, the base plate 3 comprises a plurality of grooves 7 opening to the second surface 6, each of the grooves 7 having a bottom surface 8. In this case, the bottom surface 8 means the inner surface of the grooves 7 opposite to their opening to the second surface 6. In other embodiments of the assembly 1, any number of grooves 7 greater than one may be provided. For example, when the assembly 1 comprises only one magnet 2, at least two grooves 7 are required.

As seen in the example of Figure 1, the assembly 1 further comprises a cover part 9 arranged to secure the magnets 2 against the base plate 3. The cover part 9 in this example has a plurality of parallel sections 10 with a substantially U-shaped cross-section, while in other embodiments, also only one section 10 may be provided, for example. The sections 10 may be provided as individual pieces that are either attached to each other by means of, for example, glueing, or they may be provided as separate pieces such that they are only locked to their positions at the final assembly step. Each U-shaped section 10 has a first branch 11 and a second branch 12 partially enclosing one of the magnets 2 between them, and the first 11 and the second branch 12 each extend into one of the grooves 7. More precisely, each magnet 2 in this case is enclosed by the branches 11, 12 on three sides, while being in contact to the outside of the cover part 9 at their two opposite sides. When the assembly 1 comprises several U-shaped sections 10, as illustrated in the example of Figure 1, adjacent branches 11, 12 of each adjacent section 10 extend to the same groove 7. In this configuration, said adjacent branches 11, 12 are guided into contact with each other by the groove 7.

As seen in the example of Figure 1, each of the first 11 and the second branch 12 is provided with a protrusion 13 such that the protrusions 13 at the different branches extend towards each other. In this example, the first 11 and the second branches 12 are also provided with a fixing bar 16 at each of the grooves 7, the fixing bars 16 tightly connecting to the branches. In this case, the fixing bar 16 partially forms the protrusion 13 at each of the first 11 and the second branch 12. With the arrangement as disclosed, the fixing bars 16, which may be manufactured of a strong and non-flexible material, such as steel or other metal, may be used for providing a robust anchoring point between the base plate 3 and the cover part 9 at each of the first 11 and second branches 12. In some embodiments, the protrusions 13 may also be entirely formed by the fixing bar 16, or the protrusions 13 may be completely formed as integral parts of the cover part 9 without using any fixing bars 16.

The rotor magnet assembly 1 also comprises a tightening piece 14 at each of the grooves 7 for tightening the protrusion 13 towards the bottom surface 8. In the example of Figure 1, the tightening pieces 14 are provided as tightening bolts 17 extending through the base plate 3 from the first surface 4 until inside of the protrusions 13 and threadedly engaging the protrusions 13, thereby enabling the protrusions 13 to be pulled towards the bottom surfaces 8 as the tightening bolts 17 are tightened. This, in turn, causes the cover part 9 to be pulled towards the magnets 2 provided between the first 11 and the second branches 12, thereby securing the magnets 2 against the base plate 3 by compression. More precisely, in the example of Figure 1 the tightening bolts 17 extend to the inside of the fixing bars 16 partially forming the protrusions 13. In the example of Figure 1, the base plate 3 is provided with through holes 26 extending between the first surface 4 and the grooves 7 for accommodating the tightening bolts 17, wherein the through holes 26 are arranged to be wider in the vicinity of the first surface 4 so as to accommodate heads of the bolts 17. In other embodiments of the assembly, also screws may be used instead of the bolts.

In the example of Figure 1, the parts of the protrusions 13 connecting to the fixing bars 16 are shaped to have a wedge-like shape, such that their thickness increases towards their lower parts, in other words towards the bottom surfaces 8 of the grooves 7. At the same time, the fixing bars 16 are also formed into a wedge-like shape, such that their thickness decreases towards the bottom surface 8. With said arrangement, a tight fit is ensured between the branches 11, 12 and the fixing bars 16, as well as between the branches and the walls of the grooves 7 when the tightening bolts 17 are tightened, as the wedge-shaped fixing bars 16 push against the wedged shapes of the branches.

Figure 2 illustrates a cross-cut section of a second embodiment of the rotor magnet assembly 1. As this example shares most of the structural features disclosed above in relation to the example of Figure 1, mostly features characteristic to this second embodiment are discussed here. In the examples of both Figures 1 and 2, the base plate 3 comprises a flange 15 at each groove 7 extending along the second surface 6 at an upper part of the groove 7. In other words, the flanges 15 are provided to limit the width of the grooves 7 in the area of their openings to the second surface 6, wherein the grooves 7 have a wider section at their lower parts below the flanges 15 for accommodating the protrusions 13 of the first 11 and the second branches 12. In both examples, the flange 15 and the protrusion 13 at each of the grooves 7 are mutually shaped to prevent the cover part 9 from moving past a predefined distance to a direction perpendicular to the bottom surface 8 of the grooves 7. In other words, in said arrangement the flanges 15 prevent the cover part 9 from becoming detached from the base plate 3 as a result of pulling in the radial direction of the rotor 5 after attaching the assembly 1 to the rotor 5, as the opening width of the grooves 7 is smaller than the width of the protrusions 13.

In the examples of Figures 1 and 2, the base plate 3 also has two opposite side surfaces 25 extending between the first 4 and the second surface 6, wherein the grooves 7 also open to these side surfaces 25. With this arrangement, the first 11 and the second branches 12 of the cover part 9 may be inserted into their correct positions within the grooves 7 through the side surfaces 25, such that the flanges 15 do not obstruct the insertion. In some embodiments, the grooves 7 may also open to only one of the side surfaces 25.

In the example of Figure 2, the tightening pieces 14 are provided as wedges 18 provided between the protrusion 13 and the flange 15 at each of the grooves 7. More precisely, in this example the protrusions 13 are also shaped to have a wedge-like shape at their sides contacting the wedges 18, and the grooves 7 are provided with form-fitting slots accommodating the wedges 18. In this arrangement, no tightening bolts or screws are required for securing the magnets 2, as the tightening may be accomplished by pushing the wedges 18 to their final positions inside the dedicated slots, causing them to push the protrusions 13 towards the bottom surfaces 8 of the slots 7. As the contact surface between the protrusions 13 and the wedges 18 has a diagonal orientation in relation to the direction of extension of the slots 7, a tight fit is ensured between the branches 11, 12 and the wedges 18, as well as between the branches and the walls of the grooves 7 when the wedges 18 are pushed to their final positions. In some embodiments, however, the protrusions 13 and the grooves 7 may be shaped such that a gap is formed between them extending in the direction of the second surface 6, for example, wherein the wedge 18 may be provided into this gap to push the protrusions 13 directly towards the bottom surface 8 of the gaps 7.

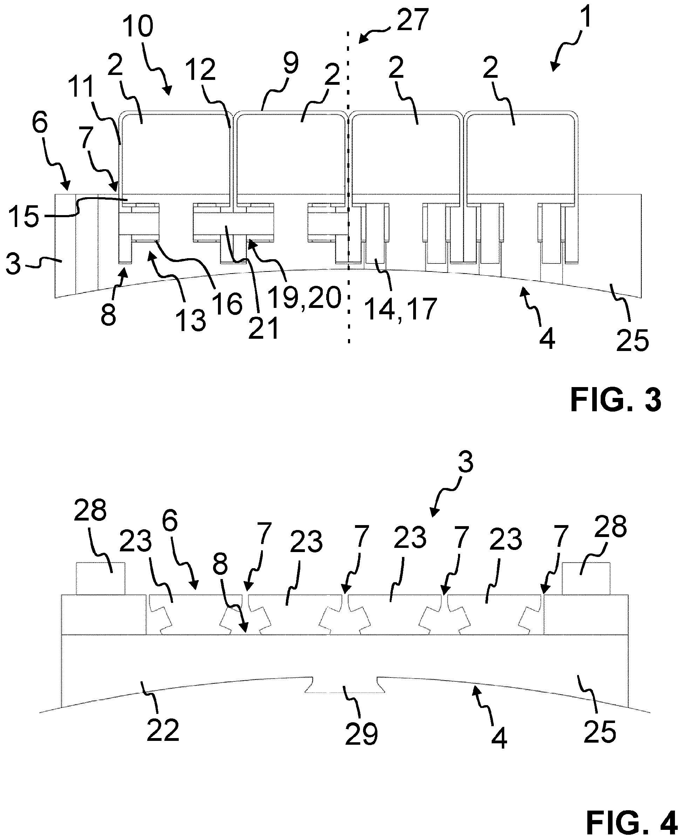

Figure 3 illustrates a cross-cut section of a third embodiment of the rotor magnet assembly 1, wherein a different cross-cut plane is shown on the left and right sides of a vertical middle plane 27 of the assembly, as illustrated with a dashed line. As this example shares most of the structural features disclosed above in relation to the examples of Figures 1 and 2, mostly features characteristic to this third embodiment are discussed here. In the example of Figure 3, the tightening pieces 14 are provided as tightening screws 17 extending through the protrusions 13 and the base plates 3 from the first surface 4 until the flange 15 and threadedly engaging the protrusion 13. More precisely, as the assembly in this embodiment also comprises a fixing bar 16 partially forming the protrusion 13 at each of the grooves 7, the tightening screws 17 extend through the fixing bars 16 until the flange 15 and threadedly engage the fixing bars 16. In the arrangement as disclosed, the flanges 15 provide a surface facing the protrusions 13 at each of the grooves 7, said surface acting as a countering surface against which the tightening screw 17 pushes during the tightening.

In the example of Figure 3, the connection between the branches 11, 12 of the cover part 9 and the fixing bars 16 is also illustrated. In the illustrated arrangement, the first 11 and the second branch 12 are provided with first through holes 19 aligning with second through holes 20 provided to the corresponding fixing bar 16, and fixing pins 21 are provided to extend from the first through holes 19 to the corresponding second through holes 20. With the arrangement as disclosed, a robust connection between the branches 11, 12 and the fixing bars 16 may be obtained against pulling in the radial direction of the rotor 5 after attaching the assembly 1 to the rotor 5. Said arrangement may also be easily disassembled if necessary, as the fixing pins 21 are not fixedly connected to the branches 11, 12 or to the fixing bar 16.

In the example of Figure 1, the rotor magnet assembly 1 also comprises an adapter piece 24 arranged between the magnet 2 and the cover part 9 at each of the sections 10 with the substantially U-shaped cross-section. The outer shape of the adapter piece 24 in this example corresponds to the inner shape of the section 10, and thereby acts as a shape adapter for accommodating magnet blocks to the assembly having an outer shape mismatching the shape of the cover part 9. Thereby, the sections 10 of the cover part 9 and the magnets 2 may be more freely shaped, as their shapes do not need to correspond to each other. The adapter pieces 24 are favorably manufactured of a magnetically resistive material, for example a resistive metal alloy. The cover part 9 is also favorably manufactured of a magnetically resistive material having high stiffness and mechanical strength, for example carbon fiber. In some embodiments, also several magnets 2 may be accommodated to the same section 10 of the cover part 9, such that these magnets 2 together with or without the adapter piece 24 conform to the inner shape of the section 10. Further, in arrangements where only one magnet 2 is accommodated to the U-shaped section 10 without the adapter piece 24, the outer shape of the magnet 2 may be formed such that it corresponds directly to any given variation of the inner shape of the section 10.

Figure 4 illustrates a cross-cut section of a base plate 3 according to a fourth embodiment of the rotor magnet assembly 1. In this example, the base plate 3 comprises a base segment 22 having the first surface 4 and a plurality of parallel top segments 23 connecting to the base segment 22 at a distance from each other. Said connecting may be accomplished by using fixing bolts or screws extending between the base segment 22 and the top segments 23, for example. The top segments 23 then mutually define the second surface 6 such that the second surface 6 is formed by top surfaces of the top segments 23 facing away from the base segment 22, and the grooves 7 are formed between adjacent top segments 23. In this configuration, the bottom surfaces 8 of the grooves 7 are formed on the surface of the base segment 22 accommodating the top segments 23. With the arrangement as disclosed, modularity of the assembly 1 is further increased, as the shape and number of the grooves 7 may be adjusted as desired using the same base segment 22 configuration. Another advantage of the arrangement is that the base segment 22 and the top segments 23 may be easily manufactured as separate units using conventional machining methods, as opposed to a unibody configuration where the grooves 7 need to be formed into a single base plate preform. In the example of Figure 4, an alternative method for attaching the base plate 3 to the rotor 5 is also illustrated, wherein the first surface 4 of the base plate 3 is provided with a fixing protrusion 29 arranged to connect to a groove provided to the rotor 5 by a shape locking dovetail -arrangement.

It is to be understood that the above description and the accompanying figures are only intended to illustrate the present invention. It will be obvious to a person skilled in the art that the invention can be varied and modified without departing from the scope of the invention.

## Claims

1. A rotor magnet assembly (1) comprising at least one magnet (2), wherein the assembly further comprises:
a base plate (3) having a first surface (4) for attaching against the rotor (5) and an opposite second surface (6) accommodating the at least one magnet (2), wherein the base plate (3) comprises at least two grooves (7) opening to the second surface (6), each groove (7) having a bottom surface (8), and
a cover part (9) arranged to secure the at least one magnet (2) against the base plate (3), wherein
the cover part (9) has at least one section (10) with a substantially U-shaped cross-section having a first branch (11) and a second branch (12) at least partially enclosing the at least one magnet (2) between them, wherein the first (11) and the second branch (12) each extend into one of the at least two grooves (7),
each of the first (11) and the second branch (12) is provided with a protrusion (13), the protrusions (13) extending towards each other, and
the rotor magnet assembly (1) further comprises a tightening piece (14) at each of the at least two grooves (7) for tightening the protrusion (13) towards the bottom surface (8).

2. The rotor magnet assembly (1) according to claim 1, **characterized in that** the base plate (3) further comprises a flange (15) at each groove (7) extending along the second surface (6) at an upper part of the groove (7).

3. The rotor magnet assembly (1) according to claim 1 or 2, **characterized in that** the first (11) and the second branch (12) of the cover part (9) are provided with a fixing bar (16) at each of the at least two grooves (7), the fixing bar (16) at least partially forming the protrusion (13) at each of the first (11) and the second branch (12).

4. The rotor magnet assembly (1) according to any one of the claims 1 to 3, **characterized in that** the tightening piece (14) comprises a tightening screw or bolt (17) extending through the base plate (3) from the first surface (4) until inside of the protrusion (13) and threadedly engaging the protrusion (13).

5. The rotor magnet assembly (1) according to claim 2, **characterized in that** the tightening piece (14) comprises a tightening screw or bolt (17) extending through the protrusion (13) and the base plate (3) from the first surface (4) until the flange (15) and threadedly engaging the protrusion (13).

6. The rotor magnet assembly (1) according to claims 2 and 3, **characterized in that** the tightening piece (14) comprises a tightening screw or bolt (17) extending through the fixing bar (16) and the base plate (3) from the first surface (4) until the flange (15) and threadedly engaging the fixing bar (16).

7. The rotor magnet assembly (1) according to claim 2, **characterized in that** the tightening piece (14) comprises a wedge (18) provided between the protrusion (13) and the flange (15) at each of the at least two grooves (7).

8. The rotor magnet assembly (1) according to any one of the claims 2 and 5 to 7, **characterized in that** the flange (15) and the protrusion (13) at each of the at least two grooves (7) are mutually shaped to prevent the cover part (9) from moving past a predefined distance to a direction opposite to the bottom surface (8) of the grooves (7).

9. The rotor magnet assembly (1) according to claim 3 or 6, **characterized in that** the first (11) and the second branch (12) are provided with first through holes (19) aligning with second through holes (20) provided to the corresponding fixing bar (16), and the rotor magnet assembly (1) further comprises fixing pins (21) extending from the first through holes (19) to the corresponding second through holes (20).

10. The rotor magnet assembly (1) according to any one of the claims 1 to 9, **characterized in that** the rotor magnet assembly (1) comprises a plurality of magnets (2) accommodated to the base plate (3) and the cover part (9) has a plurality of sections (10) with the substantially U-shaped cross-section arranged parallel to each other, the first branch (11) and the second branch (12) of each section (10) at least partially enclosing one of the magnets (2) between them, and
the base plate (3) comprises a plurality of grooves (7) opening to the second surface (6), wherein adjacent branches (11, 12) of each adjacent section (10) extend to the same groove (7).

11. The rotor magnet assembly (1) according to any one of the claims 1 to 10, **characterized in that** the base plate (3) comprises a base segment (22) having the first surface (4) and a plurality of parallel top segments (23) connecting to the base segment (22) at a distance from each other and mutually defining the second surface (6), wherein the at least two grooves (7) are formed between adjacent top segments (23).

12. The rotor magnet assembly (1) according to any one of the claims 1 to 11, **characterized in that** the rotor magnet assembly (1) further comprises an adapter piece (24) arranged between the at least one magnet (2) and the cover part (9), an outer shape of the adapter piece (24) corresponding to an inner shape of the section (10) of the cover part (9) with the substantially U-shaped cross-section.

13. The rotor magnet assembly (1) according to any one of the claims 1 to 12, **characterized in that** the base plate (3) has two opposite side surfaces (25) extending between the first (4) and the second surface (6), and the at least two grooves (7) open to at least one of the side surfaces (25).

## Patentansprüche

1. Rotormagnetbaugruppe (1), die mindestens einen Magneten (2) umfasst, wobei die Baugruppe ferner Folgendes umfasst:
eine Basisplatte (3) mit einer ersten Fläche (4) zum festen Anliegen an dem Rotor (5) und einer gegenüberliegenden zweiten Fläche (6), die den mindestens einen Magneten (2) aufnimmt, wobei die Basisplatte (3) mindestens zwei sich zu der zweiten Fläche (6) hin öffnende Nuten (7) umfasst, wobei jede Nut (7) eine Bodenfläche (8) aufweist, und
ein Abdeckteil (9), das angeordnet ist, um den mindestens einen Magneten (2) an der Basisplatte (3) zu befestigen, wobei
das Abdeckteil (9) mindestens einen Abschnitt (10) mit einem im Wesentlichen U-förmigen Querschnitt aufweist, der einen ersten Schenkel (11) und einen zweiten Schenkel (12), die den mindestens einen Magneten (2) zumindest teilweise umschließen, aufweist, wobei sich der erste (11) und der zweite Schenkel (12) jeweils in eine der mindestens zwei Nuten (7) hinein erstrecken,
sowohl der erste (11) als auch der zweite Schenkel (12) mit einem Vorsprung (13) versehen sind, wobei sich die Vorsprünge (13) zueinander hin erstrecken und
die Rotormagnetbaugruppe (1) ferner ein Spannstück (14) an jeder der mindestens zwei Nuten (7) zum Spannen des Vorsprungs (13) zu der Bodenfläche (8) hin umfasst.

2. Rotormagnetbaugruppe (1) nach Anspruch 1, **dadurch gekennzeichnet, dass** die Basisplatte (3) ferner einen sich entlang der zweiten Fläche (6) an einem oberen Teil der Nut (7) erstreckenden Flansch (15) an jeder Nut (7) umfasst.

3. Rotormagnetbaugruppe (1) nach Anspruch 1 oder 2, **dadurch gekennzeichnet, dass** der erste (11) und der zweite Schenkel (12) des Abdeckteils (9) mit einer Befestigungsstange (16) an jeder der mindestens zwei Nuten (7) versehen sind, wobei die Befestigungsstange (16) zumindest teilweise den Vorsprung (13) an sowohl dem ersten (11) als auch dem zweiten Schenkel (12) bildet.

4. Rotormagnetbaugruppe (1) nach einem der Ansprüche 1 bis 3, **dadurch gekennzeichnet, dass** das Spannstück (14) eine Spannschraube oder Schraube (17) umfasst, die sich von der ersten Fläche (4) bis zur Innenseite des Vorsprungs (13) durch die Basisplatte (3) erstreckt und mit dem Vorsprung (13) in Gewindeeingriff steht.

5. Rotormagnetbaugruppe (1) nach Anspruch 2, **dadurch gekennzeichnet, dass** das Spannstück (14) eine Spannschraube oder Schraube (17) umfasst, die sich von der ersten Fläche (4) durch den Vorsprung (13) und die Basisplatte (3) bis zu dem Flansch (15) erstreckt und mit dem Vorsprung (13) in Gewindeeingriff steht.

6. Rotormagnetbaugruppe (1) nach den Ansprüchen 2 und 3, **dadurch gekennzeichnet, dass** das Spannstück (14) eine Spannschraube oder Schraube (17) umfasst, die sich von der ersten Fläche (4) durch die Befestigungsstange (16) und die Basisplatte (3) bis zu dem Flansch (15) erstreckt und mit der Befestigungsstange (16) in Gewindeeingriff steht.

7. Rotormagnetbaugruppe (1) nach Anspruch 2, **dadurch gekennzeichnet, dass** das Spannstück (14) einen zwischen dem Vorsprung (13) und dem Flansch (15) an jeder der mindestens zwei Nuten (7) vorgesehenen Keil (18) umfasst.

8. Rotormagnetbaugruppe (1) nach einem der Ansprüche 2 und 5 bis 7, **dadurch gekennzeichnet, dass** der Flansch (15) und der Vorsprung (13) an jeder der mindestens zwei Nuten (7) zusammenpassend geformt sind, um zu verhindern, dass sich das Abdeckteil (9) über einen vordefinierten Abstand hinaus in eine der Bodenfläche (8) der Nuten (7) entgegengesetzte Richtung bewegt.

9. Rotormagnetbaugruppe (1) nach Anspruch 3 oder 6, **dadurch gekennzeichnet, dass** der erste (11) und der zweite Schenkel (12) mit ersten Durchgangsbohrungen (19), die auf zweite Durchgangsbohrungen (20) ausgerichtet sind, die für die entsprechende Befestigungsstange (16) vorgesehen sind, versehen sind und die Rotormagnetbaugruppe (1) ferner sich von den ersten Durchgangsbohrungen (19) zu den entsprechenden zweiten Durchgangsbohrungen (20) erstreckende Befestigungsstifte (21) umfasst.

10. Rotormagnetbaugruppe (1) nach einem der Ansprüche 1 bis 9, **dadurch gekennzeichnet, dass** die Rotormagnetbaugruppe (1) mehrere von der Basisplatte (3) aufgenommene Magnete (2) umfasst und das Abdeckteil (9) mehrere Abschnitte (10) mit dem im Wesentlichen U-förmigen Querschnitt, die parallel zueinander angeordnet sind, aufweist, wobei der erste Schenkel (11) und der zweite Schenkel (12) jedes Abschnitts (10) einen der Magnete (2) zumindest teilweise umschließen, und
die Basisplatte (3) mehrere sich zu der zweiten Fläche (6) hin öffnende Nuten (7) umfasst, wobei sich benachbarte Schenkel (11, 12) jedes benachbarten Abschnitts (10) bis zu derselben Nut (7) erstrecken.

11. Rotormagnetbaugruppe (1) nach einem der Ansprüche 1 bis 10, **dadurch gekennzeichnet, dass** die Basisplatte (3) ein Basissegment (22) mit der ersten Fläche (4) und mehrere parallele obere Segmente (23), die in einem Abstand zueinander mit dem Basissegment (22) verbunden sind und die zweite Fläche (6) gemeinsam definieren, umfasst, wobei die mindestens zwei Nuten (7) zwischen benachbarten oberen Segmenten (23) gebildet sind.

12. Rotormagnetbaugruppe (1) nach einem der Ansprüche 1 bis 11, **dadurch gekennzeichnet, dass** die Rotormagnetbaugruppe (1) ferner ein zwischen dem mindestens einen Magneten (2) und dem Abdeckteil (9) angeordnetes Adapterstück (24) umfasst, wobei eine Außenform des Adapterstücks (24) einer Innenform des Abschnitts (10) des Abdeckteils (9) mit dem im Wesentlichen U-förmigen Querschnitt entspricht.

13. Rotormagnetbaugruppe (1) nach einem der Ansprüche 1 bis 12, **dadurch gekennzeichnet, dass** die Basisplatte (3) zwei gegenüberliegende Seitenflächen (25), die sich zwischen der ersten (4) und der zweiten Fläche (6) erstrecken, aufweist und die mindestens zwei Nuten (7) sich zu mindestens einer der Seitenflächen (25) hin öffnen.

## Revendications

1. Ensemble d'aimant de rotor (1) comprenant au moins un aimant (2), dans lequel l'ensemble comprend en outre :
une plaque de base (3) ayant une première surface (4) destinée à l'attache contre le rotor (5) et une seconde surface opposée (6) logeant l'au moins un aimant (2), dans lequel la plaque de base (3) comprend au moins deux rainures (7) s'ouvrant sur la seconde surface (6), chaque rainure (7) ayant une surface de fond (8), et
une partie couvercle (9) agencée pour assujettir l'au moins un aimant (2) contre la plaque de base (3), dans lequel
la partie couvercle (9) a au moins une section (10) avec une section transversale sensiblement en forme de U ayant une première branche (11) et une seconde branche (12) entourant au moins partiellement l'au moins un aimant (2) entre elles, dans lequel la première (11) et la seconde branche (12) s'étendent chacune dans une des au moins deux rainures (7),
chacune de la première (11) et de la seconde branche (12) est pourvue d'une saillie (13), les saillies (13) s'étendant l'une vers l'autre, et
l'ensemble d'aimant de rotor (1) comprend en outre une pièce de resserrage (14) au niveau de chacune des au moins deux rainures (7) pour resserrer la saillie (13) vers la surface de fond (8).

2. Ensemble d'aimant de rotor (1) selon la revendication 1, **caractérisé en ce que** la plaque de base (3) comprend en outre une aile (15) au niveau de chaque rainure (7) s'étendant le long de la seconde surface (6) au niveau d'une partie supérieure de la rainure (7).

3. Ensemble d'aimant de rotor (1) selon la revendication 1 ou 2, **caractérisé en ce que** la première (11) et la seconde branche (12) de la partie couvercle (9) sont pourvues d'une barre de fixation (16) au niveau de chacune des au moins deux rainures (7), la barre de fixation (16) formant au moins partiellement la saillie (13) au niveau de chacune de la première (11) et de la seconde branche (12).

4. Ensemble d'aimant de rotor (1) selon l'une quelconque des revendications 1 à 3, **caractérisé en ce que** la pièce de resserrage (14) comprend une vis ou un boulon de resserrage (17) s'étendant à travers la plaque de base (3) depuis la première surface (4) jusqu'à l'intérieur de la saillie (13) et entrant en prise filetée avec la saillie (13).

5. Ensemble d'aimant de rotor (1) selon la revendication 2, **caractérisé en ce que** la pièce de resserrage (14) comprend une vis ou un boulon de resserrage (17) s'étendant à travers la saillie (13) et la plaque de base (3) depuis la première surface (4) jusqu'à l'aile (15) et entrant en prise filetée avec la saillie (13).

6. Ensemble d'aimant de rotor (1) selon les revendications 2 et 3, **caractérisé en ce que** la pièce de resserrage (14) comprend une vis ou un boulon de resserrage (17) s'étendant à travers la barre de fixation (16) et la plaque de base (3) depuis la première surface (4) jusqu'à l'aile (15) et entrant en prise filetée avec la barre de fixation (16).

7. Ensemble d'aimant de rotor (1) selon la revendication 2, **caractérisé en ce que** la pièce de resserrage (14) comprend une cale (18) prévue entre la saillie (13) et l'aile (15) au niveau de chacune des au moins deux rainures (7).

8. Ensemble d'aimant de rotor (1) selon l'une quelconque des revendications 2 et 5 à 7, **caractérisé en ce que** l'aile (15) et la saillie (13) au niveau de chacune des au moins deux rainures (7) sont formées mutuellement pour empêcher la partie couvercle (9) de se déplacer au-delà d'une distance prédéfinie vers une direction opposée à la surface de fond (8) des rainures (7).

9. Ensemble d'aimant de rotor (1) selon la revendication 3 ou 6, **caractérisé en ce que** la première (11) et la seconde branche (12) sont pourvues de premiers trous traversants (19) s'alignant avec des seconds trous traversants (20) prévus sur la barre de fixation correspondante (16), et l'ensemble d'aimant de rotor (1) comprend en outre des goupilles de fixation (21) s'étendant depuis les premiers trous traversants (19) jusqu'aux seconds trous traversants correspondants (20).

10. Ensemble d'aimant de rotor (1) selon l'une quelconque des revendications 1 à 9, **caractérisé en ce que** l'ensemble d'aimant de rotor (1) comprend une pluralité d'aimants (2) logés sur la plaque de base (3) et la partie couvercle (9) a une pluralité de sections (10), avec la section transversale sensiblement en forme de U, agencées parallèlement les unes aux autres, la première branche (11) et la seconde branche (12) de chaque section (10) entourant au moins partiellement un des aimants (2) entre elles, et
la plaque de base (3) comprend une pluralité de rainures (7) s'ouvrant sur la seconde surface (6), dans lequel des branches adjacentes (11, 12) de chaque section adjacente (10) s'étendent jusqu'à la même rainure (7).

11. Ensemble d'aimant de rotor (1) selon l'une quelconque des revendications 1 à 10, **caractérisé en ce que** la plaque de base (3) comprend un segment de base (22) ayant la première surface (4) et une pluralité de segments de dessus parallèles (23) se reliant au segment de base (22) à une distance les uns des autres et définissant mutuellement la seconde surface (6), dans lequel les au moins deux rainures (7) sont formées entre des segments de dessus adjacents (23).

12. Ensemble d'aimant de rotor (1) selon l'une quelconque des revendications 1 à 11, **caractérisé en ce que** l'ensemble d'aimant de rotor (1) comprend en outre une pièce adaptatrice (24) agencée entre l'au moins un aimant (2) et la partie couvercle (9), une forme extérieure de la pièce adaptatrice (24) correspondant à une forme intérieure de la section (10) de la partie couvercle (9) avec la section transversale sensiblement en forme de U.

13. Ensemble d'aimant de rotor (1) selon l'une quelconque des revendications 1 à 12, **caractérisé en ce que** la plaque de base (3) a deux surfaces latérales opposées (25) s'étendant entre la première (4) et la seconde surface (6), et les au moins deux rainures (7) s'ouvrent sur au moins une des surfaces latérales (25).
